Europäisches Patentamt

European Patent Office

Office européen des brevets

(19)

(11) Numéro de publication: **0 044 885**

**B1**

(12) **FASCICULE DE BREVET EUROPEEN**

(45) Date de publication du fascicule du brevet: **12.12.84**

(21) Numéro de dépôt: **80107901.3**

(22) Date de dépôt: **15.12.80**

(51) Int. Cl.³: **E 01 B 35/00,** G 01 B 7/28,
G 01 B 21/20

(54) **Procédé et dispositif pour la détermination d'au moins une caractéristique géométrique du champignon des rails d'une voie ferrée.**

(30) Priorité: **24.07.80 CH 5659/80**
**24.07.80 CH 5660/80**

(43) Date de publication de la demande:
**03.02.82 Bulletin 82/05**

(45) Mention de la délivrance du brevet:
**12.12.84 Bulletin 84/50**

(84) Etats contractants désignés:
**AT BE CH DE FR GB IT LI NL SE**

(56) Documents cités:
**CH-A- 436 364**
**DE-A-2 941 945**
**DE-B-2 701 216**
**US-A-3 056 209**
**US-A-4 048 849**
**US-A-4 069 590**

(73) Titulaire: **SPENO INTERNATIONAL S.A.**
**Case Postale 16 22-24, Parc Château-Banquet**
**CH-1211 Genève 21 (CH)**

(72) Inventeur: **Panetti, Romolo**
**24, Parc Château-Banquet**
**CH-1211 Geneve 21 (CH)**

(74) Mandataire: **Micheli, Michel Pierre et al**
**MICHELI & CIE 118, Rue du Rhône Case Postale 47**
**CH-1211 Genève 6 (CH)**

EP 0 044 885 B1

Courier Press, Leamington Spa, England.

## Description

La présente invention a pour objet un procédé de mesure de certaines caractéristiques géométriques du champignon des rails d'une voie ferrée et un dispositif pour sa mise en oeuvre.

On connaît déjà des dispositifs de mesure des déformations des rails appropriés pour mesurer les défauts de leur profil longitudinal et transversal; tels que les défauts de type ondulatoire dus à l'usure provoquée par leur contact avec les roues des véhicules des convois.

Cependant d'autres défauts de la surface de roulement du rail, dus à son usure, ne peuvent être détectés par ces dispositifs de mesure, en particulier les déformations des caractéristiques géométriques du profil transversal de la table de roulement, du congé ou du flanc, telles que des degrés de courbure et son inclinaison par rapport au plan de la voie, ainsi que la forme du profil du champignon du rail par rapport à son profil de référence ou d'origine et la position de ce profil transversal par rapport à l'autre file de rails.

L'inclinaison transversale de la table de roulement des rails vers l'intérieur de la voie est prévue, en combinaison avec la conicité du bandage des roues des véhicules, pour assurer la stabilité de ces derniers sur la voie. Cette inclinaison varie selon les réseaux de chemin de fer entre 1/20e et 1/40e environ.

La courbure de la table de roulement des rails est prévue pour assurer les meilleures conditions au contact rail-roue en minimisant au maximum les effets de glissement et de frottement dus aux différentes vitesses périphériques de ·rotation auxquelles sont soumises les différentes zones de contact du bandage conique des roues avec la table de roulement.

La dégradation par usure de ces deux caractéristiques de la table de roulement des rails, inclinaison et courbure, est donc intéressante à surveiller car elle contribue pour une part non négligeable à l'accélération de la dégradation globale des qualités de la table de roulement des rails de la voie et devrait de ce fait entrer en considération pour décider de l'opportunité d'une rectification par meulage, avant que cette dégradation ne devienne préjudiciable à la bonne circulation des convois.

Il est connu du brevet DE—B—2.701216 de mesurer des distances séparant plusieurs points de la surface du champignon d'un rail d'une base de référence formée par un plan sensiblement horizontal tangent à la surface de roulement de ce rail.

Il est connu du brevet CH—A—436.364 de déterminer par rapport au plan de la voie les variations de dévers de celle-ci.

L'invention a pour but de permettre par des moyen simples la détermination de certaines caractéristiques du profil transversal du champignon des rails d'une voie ferrée telles que l'inclinaison, la courbure, ou même son profil transversal partiel ou complet, ainsi que son positionnement par rapport à l'autre file de rails.

Le procédé selon l'invention se distingue par le fait qu'on définit une base de référence perpendiculaire à l'axe de la voie et parallèle à une droite tangente à la surface de roulement des deux files de rails; qu'on détermine la position d'au moins deux points de la surface du champignon d'un rail par rapport à cette base de référence; et qu'on détermine à l'aide de ces mesures au moins une caractéristique du profil transversal de la surface du champignon du rail en fonction de sa position par rapport à l'autre file de rails.

L'invention a également pour objet un dispositif pour la détermination de caractéristiques du profil transversal du champignon d'un rail d'une voie ferrée qui se distingue par le fait qu'il comporte un chariot de mesure en appui latéral et vertical sur les deux files de rails d'une voie ferrée à l'aide d'organes d'appuis définissant une base de référence perpendiculaire à l'axe de cette voie et parallèle à une droite tangente au plan de roulement des deux files de rails; au moins deux capteurs délivrant des signaux représentatifs de distances séparant au moins deux génératrices du profil du champignon d'un rail de la base de référence; et un dispositif électronique comportant une unité de calcul déterminant à partir des signaux émis par les capteurs une caractéristique du profil transversal réel du rail en fonction de sa position par rapport à l'autre file de rails.

Le dessin annexé illustre schématiquement et à titre d'exemple une forme d'exécution du dispositif de mesure selon la présente invention.

La figure 1 est une vue de côté d'un chariot de mesure.

La figure 2 est une coupe transversale à plus grande échelle, de ce chariot de mesure.

La figure 3 est un détail partiel agrandi de la figure 2.

La figure 4 illustre un schéma bloc du dispositif électronique de traitement de la mesure.

La figure 5 illustre la coupe d'un champignon d'un rail avec son profil de référence en pointillé.

Les figures 6 et 7 illustrent des représentations graphiques de l'écart de profil transversal du champignon.

La figure 8 illustre le schéma bloc d'une variante du dispositif électronique de traitement des mesures.

Le procédé selon la présente invention vise à permettre la détermination en continu, c'est-à-dire pendant le cheminement d'un véhicule le long d'une voie ferrée, de certaines au moins des caractéristiques du profil transversal du champignon d'un rail de cette voie ferrée en fonction de sa position par rapport à l'autre rail, soit pour chaque point du rail, soit à des intervalles déterminés le long de celui-ci. En plus, on cherche à mettre en évidence les écarts que peuvent présenter ces caractéristiques mesurées sur un rail usé par rapport aux valeurs de références ou de consigne relatives à un rail neuf parfaitement positionné par rapport à l'autre rail de la voie ferrée.

Ce procédé permet plus particulièrement de déterminer trois caractéristiques du profil transversal du rail qui sont:

1) son inclinaison représentée par l'angle que forme une droite passant par deux points situés sur les côtés opposés de la surface de roulement du rail par rapport à une droite, tangente aux surfaces de roulement des deux rails d'une voie de chemin de fer, perpendiculaire à l'axe longitudinal de la voie.

2) sa courbure représentée par la flèche que présente la surface de roulement sur une corde sous-tendue déterminée.

3) tout ou partie de son profil transversal, c'est-à-dire la forme de la surface du champignon du rail en un point donné de la voie, ainsi que son positionnement angulaire par rapport à l'autre rail. Il s'agit là d'une caractéristique complexe renfermant l'inclinaison de la surface de roulement, sa flèche et sa forme, non seulement dans la zone de la surface de roulement, mais également sur le bord du champignon du rail soit le congé et le flanc de celui-ci.

Pour mesurer ces différentes caractéristiques du profil transversal du champignon du rail il faut avoir une base de référence, qui sera parallèle au plan de la voie, déterminée par une droite perpendiculaire à l'axe de la voie et parallèle à une tangente aux surfaces de roulement des deux files de rails. Une telle base de référence peut être matérialisée par une partie d'un chariot de mesure roulant sur la voie par l'intermédiaire de galets en appui vertical et horizontal contre les deux files de rails.

a) Pour la détermination de l'inclinaison de la surface de roulement d'un rail on mesure les distances séparant ladite base de référence par rapport à deux génératrices du champignon du rail, situées approximativement sur les bords de la surface de roulement du rail.

Ces deux grandeurs Ya et Yc étant alors connues, on détermine l'inclinaison de la surface de roulement du rail par la formule suivante:

$$i = \frac{Yc - Ya}{D}$$

où D est la distance séparant lesdites génératrices et i correspond à la tangente de l'angle d'inclinaison de la surface de roulement.

b) Pour la détermination de la flèche de la surface de roulement, on mesure en plus des distances Ya et Yc la distance Yb séparant la base de référence d'un point du rail situé approximativement au milieu des génératrices délimitant la surface de roulement du rail et la flèche est alors donnée par la formule:

$$f = \frac{Ya + Yc - 2Yb}{2}$$

c) Enfin, pour la détermination de la forme et de la position angulaire de tout ou partie du profil transversal du champignon du rail, on mesure la distance séparant la base de référence d'une pluralité de points de la surface du champignon du rail décalés transversalement les uns par rapport aux autres. On obtient ainsi, pour un endroit donné du rail, un groupe de mesures définissant le profil réel de la surface du champignon du rail en fonction de sa position par rapport à l'autre file de rails.

Pour pouvoir utiliser aisément en pratique les mesures obtenues, on procède de la façon suivante:

a) On enregistre directement la valeur de l'inclinaison i de la voie en fonction du défilement du rail. Cette valeur de l'inclinaison de la voie i peut aussi être comparée à l'inclinaison de référence désirée io et on délivre un signal $\Delta i$, représentant l'écart d'inclinaison du rail par rapport à son inclinaison désirée, que l'on peut également reporter graphiquement en fonction du défilement du rail.

b) on enregistre directement la valeur de la flèche f de la surface de roulement du rail en fonction du défilement du rail.

Cette valeur de la flèche f de la surface de roulement du rail peut également être comparée à la flèche de référence fo désirée pour obtenir un signal $\Delta f$ donnant l'écart par rapport à la flèche désirée. Cet écart peut également être représenté graphiquement en fonction du défilement du rail.

c) on procédé de la même façon c'est-à-dire par comparaison aux valeurs correspondant au profil de référence pour mettre en évidence les écarts de forme et de position du profil transversal du champignon par rapport au profil de référence de ce champignon et à sa position angulaire par rapport à l'autre file de rails.

Toutefois, pour obtenir une reproduction graphique utilisable pratiquement, on transforme les écarts $\Delta py$ du profil réel par rapport au profil de référence en écarts $\Delta pr$ mesurés normalement au profil de référence du champignon ou $\Delta p\rho$ mesurés radialement par rapport à un pôle situé sur l'axe de symétrie du rail. Ces écarts $\Delta p\rho$ ou $\Delta pr$ peuvent alors être représentés graphiquement en fonction soit de l'angle au centre $\varphi$ soit de l'arc s à partir d'un plan médian du rail. Le profil théorique est alors représenté par la droite des abscisses et les écarts du profil $\Delta p$ sont reportés en ordonnée pour chaque point de mesure, ce qui permet une représentation graphique immédiatement lisible des écarts $\Delta p$ par rapport au profil transversal de référence et son positionnement angulaire par rapport à l'autre file de rails. En pratique on s'arrange électroniquement pour que l'écart $\Delta p$ mesuré sur la génératrice médiane de la table de roulement, où située dans le plan de symétrie du rail, soit égal à zéro. Ainsi les écarts Δp positifs correspondent à des parties de rail présentant trop de matière et les écarts Δp négatifs à des parties de rail manquant de matière par rapport au profil de référence de ce rail.

On obtient ainsi une représentation graphique précise et aisément lisible et utilisable des écarts du profil transversal du rail tant relatifs à sa forme qu'à son positionnement angulaire.

Une telle mesure du profil peut être répétée à intervalles réguliers le long de la file de rails et on obtient ainsi, par comparaison des graphiques obtenus, l'évolution de la déformation du profil du champignon du rail en fonction de la distance parcourue le long de la voie. Cette évolution peut être représentée sur un oscillographe par exemple par la succession en perspective ou de façon axionométrique d'un certain nombre de graphiques afférant à des points du rail se succédant.

Il est évident que l'on peut combiner le présent procédé de mesure des caractéristiques du profil transversal d'un rail avec les procédés connus pour la mesure du profil en long du rail, notamment de ses déformations ondulatoires ou longitudinales tel que décrit par exemple dans les brevets CH—A—630016 ou CH—A—630015. Il est possible d'utiliser certaines des mesures effectuées selon le présent procédé en combinaison avec d'autres mesures effectuées à des points espacés longitudinalement le long de la file de rails pour la détermination desdites déformations longitudinales du rail.

Il est évident également que l'on peut effectuer des mesures simultanément sur les deux files de rails.

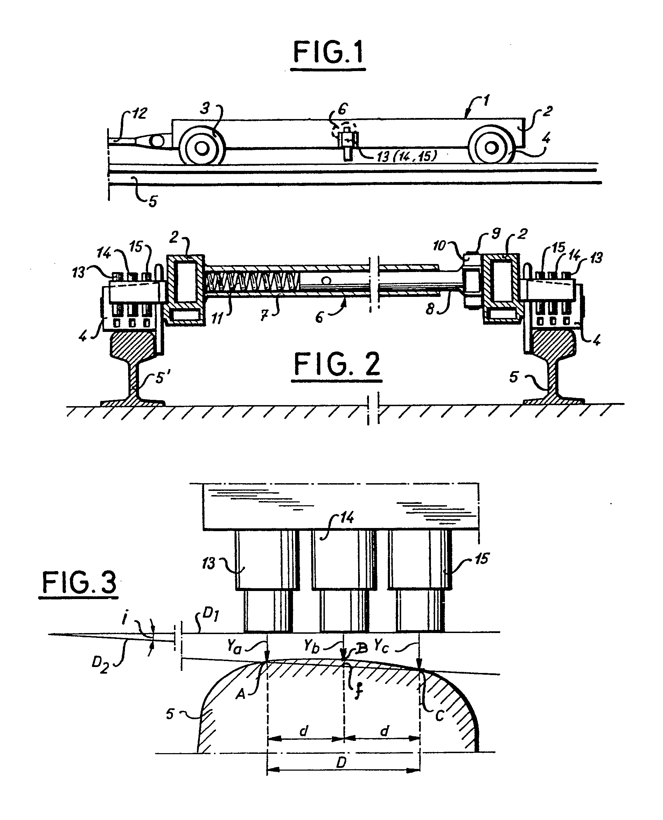

Le dispositif pour la mise en oeuvre du procédé décrit est illustré aux figures 1 à 4 et comprend un chariot de mesure 1 destiné à être déplacé en continu le long de la voie. Ce chariot comporte deux longerons 2 portant chacun à ses extrémités deux galets de roulement et de guidage 3 et 4, à boudin d'appui intérieur, prenant appui verticalement et latéralement sur les deux files de rails 5 d'une voie ferrée. Dans une variante ce chariot pourrait ne comporter qu'une traverse portant des galets en appui latéral et vertical sur les deux files de rails, des moyens étant prévus pour imposer à cette traverse une position perpendiculaire à l'axe de la voie. Une traverse médiane téléscopique de liaison 6 est composée d'une partie 7 fixée rigidement à l'un des longerons 2 et d'une partie mobile 8 articulée par son extrémité sur un axe vertical 9 porté par un support 10 fixé à l'autre longeron. Cette partie mobile 8, à course limitée, est soumise à la poussée axiale d'un ressort de compression 11 suffisant pour maintenir les boudins des galets 3 et 4 en appui contre les deux files de rails 5 pendant les parcours de mesure. Ce chariot de mesure comporte un timon 12 pour permettre sa liaison avec un véhicule ferroviaire tracteur.

Ce chariot de mesure 1 est équipé de trois capteurs de mesure 13, 14 et 15 fixés au dessus et en travers de chaque file de rails 5, entre les galets 3 et 4. Ces capteurs sont séparés par une distance d de manière à couvrir une partie au moins du contour de la table de roulement du rail, bien visible à grande échelle figure 3, à l'aplomb de trois points A, B, C, de celle-ci. De préférence les génératrices passant par les points A et C du champignon sont celles bordant approximativement la surface de roulement du rail tandis que la génératrice passant par le point B du rail est située pratiquement dans le plan médian longitudinal du rail. Ces capteurs sont des capteurs électroniques n'entrant pas en contact avec le rail, par exemple à courant de Foucault, capacitifs ou optiques aptes à émettre des signaux électriques représentatifs des distances $Y_a$, $Y_b$, $Y_c$ qui séparent les points A, B, C, de la surface de la table de roulement des rails 5 d'une base de référence $D_1$ transversale, ici définie par le chariot de mesure 1. Ces capteurs sont utilisés pour déterminer la courbure de la table de roulement des deux files de rails 5 représentée par la flèche f sous-tendant l'arc AC au point médian B et son inclinaison i par rapport au plan de la voie représentée par la tangente de l'angle formé par l'intersection du prolongement $D_2$ de la corde joignant les points A et C du contour de la table de roulement avec la droite $D_1$ formant la base de référence, parallèle au plan de la voie, définie par le chariot de mesure. Cette détermination est obtenue par application de formules simples.

$$f = \frac{Y_a + Y_c - 2Y_b}{2}$$

et

$$i = \frac{Y_c - Y_a}{D}$$

faisant intervenir les distances $Y_a$, $Y_b$ et $Y_c$ et la distance D = 2d entre les capteurs 13 et 15.

Dans une variante, on peut constructivement s'arranger pour que par exemple $Y_a$ soit égal à zéro ou à une valeur constante, c'est-à-dire que la base de référence passe par le point A. Le capteur 13 serait alors remplacé par un galet en contact avec le rail au point A. Dans ces conditions, une seule mesure est nécessaire pour la détermination de l'inclinaison i et seules deux mesures sont nécessaires pour la détermination de la flèche f.

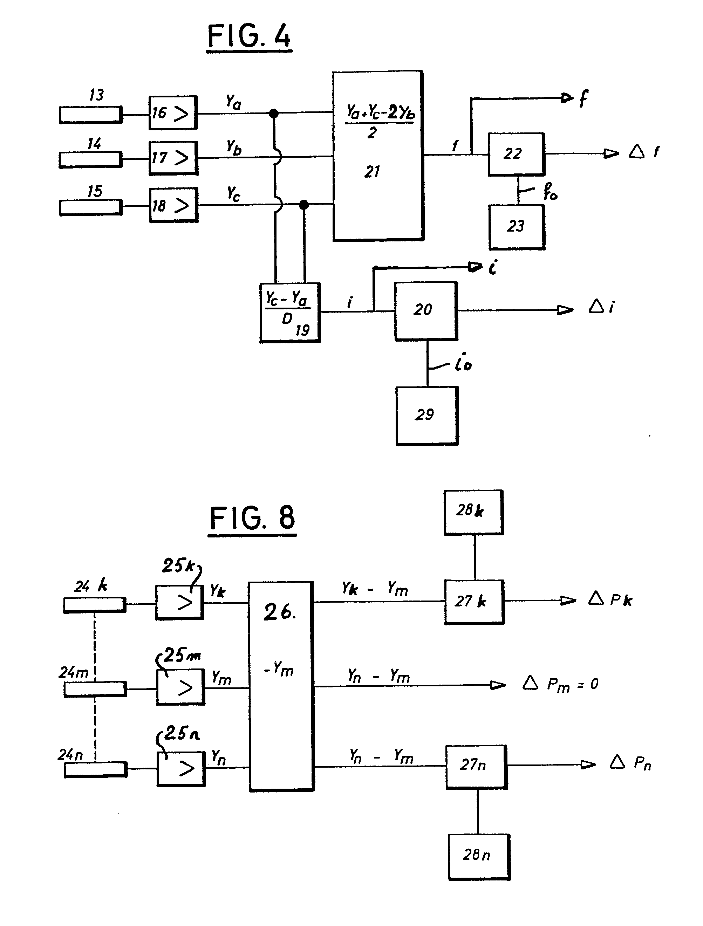

Le dispositif électronique de traitement des signaux délivrés par les capteurs 13, 14, 15 est illustré à la figure 4 et comprend des amplificateurs 16, 17, 18 amplifiant et mettant en forme les signaux des capteurs et délivrant les signaux $Y_a$ $Y_b$ $Y_c$ représentatifs des distances séparant les points A, B, C du rail de la base de référence.

Un première unité de calcul 19 dont la fonction de transfert est

$$\frac{Y_c - Y_a}{D}$$

est alimentée par les signaux $Y_c$ et $Y_a$ et délivre un signal i, représentatif de l'inclinaison de la surface de roulement du rail.

Ce signal i peut être directement enregistré en fonction du chemin parcouru le long de la voie ou délivré à un comparateur 20 comparant ce signal i à la valeur de référence de cette inclinaison io mémorisée dans une mémoire 29. Ce comparateur délivre un signal $\Delta i$ représentatif de l'écart entre la valeur de référence et la valeur réelle de l'inclinaison de la surface de roulement du rail en un endroit donné de ce rail par rapport à la base de référence donc à l'autre file de rails.

Cette valeur $\Delta i$ ou sa moyenne courante déterminée de façon connue de la façon décrite dans le brevet CH—A—588.374 peut être représentée graphiquement en fonction de la distance parcourue par le chariot de mesure.

Le dispositif électronique comporte encore une seconde unité de calcul 21 dont la fonction de transfert est

$$\frac{Y_a + Y_c - 2Y_b}{2}$$

alimentée par les signaux des trois capteurs après mise en forme et délivrant un signal f représentatif de la flèche de la surface de roulement.

Ce signal f peut être directement enregistré en fonction du défilement de la voie, c'est-à-dire du chemin parcouru, ou délivré à un comparateur 22 qui compare ce signal f à la valeur de consigne de la flèche du profil fo mémorisée dans une mémoire 23 et délivre un signal $\Delta f$ représentatif de l'écart de la flèche par rapport à sa valeur de référence désirée.

Le signal $\Delta f$ peut être ensuite traité de la même façon que le signal $\Delta i$ pour obtenir une représentation graphique facile à utiliser des écarts de flèches du profil transversal de la surface de roulement du rail tenant compte de la position angulaire de ce profil par rapport à l'autre file de rails.

Sur la bande enregistreuse d'un enregistreur les valeurs déterminées de la flèche f sont enregistrées soit directement en valeur réelle soit sous forme de graphe de leurs variations $\Delta f$ en fonction du chemin parcouru.

Le dispositif d'enregistrement peut être un enregistreur de type connu complété ou non d'un codeur pour convertir les signaux de sortie analogiques en valeurs digitales.

Les trois capteurs 13, 14 et 15 peuvent être décalés dans la direction longitudinale, par exemple lorsque leur encombrement en largeur, ou des critères de bon fonctionnement, ne permettent pas de les aligner dans un même plan. Dans ce cas, les valeurs représentatives des distances $Y_a$ $Y_b$ $Y_c$ seront déterminées sous forme de moyennes des distances détectées sur une longueur préétablie de manière à éliminer l'influence des défauts longitudinaux sur les valeurs instantanées mesurées.

Bien entendu, plus de trois points de détection peuvent être employés pour la détermination du degré de courbure de la table de roulement, par exemple lorsque l'on veut étendre l'investigation sur différentes zones de celle-ci présentant des courbures différentes. Ainsi, compte tenu de la symétrie du rail, il peut être avantageux de disposer de part et d'autre d'un capteur central, par exemple placé dans le plan de symétrie du rail, des groupes de deux capteurs disposés symétriquement à des distances différentes.

L'exemple donné pour la table de roulement est également applicable au congé et au flanc du champignon du rail, soit directement, soit par pivotement des capteurs de mesure d'un angle déterminé par rapport à la base de référence.

Les capteurs utilisés pourront être d'un autre type, par exemple du type capacitif, optique ou à touche de contact constitués par une plaquette en acier à haute résistance à l'usure, articulée en bout de leur tige mobile de mesure.

Lorsque l'on désire connaître avec plus de précisions le profil transversal du champignon du rail il faut disposer d'une pluralité de capteurs mesurant les distances séparant la base de référence des points K...N de la surface du champignon du rail situés sur des génératrices différentes de ce champignon.

On dispose donc dans ces conditions de capteurs 24k...24n mesurant les distances $Y_k$...$Y_n$ séparant lesdits points K...N de la base de référence. Les signaux délivrés par ces capteurs sont amplifiés et mis en forme séparément à l'aide d'amplificateurs 25k...25n de manière à former des signaux $Y_k$...$Y_n$ représentatifs des distances séparant les points K...N du rail de la base de référence. Ces signaux $Y_k$...$Y_n$ sont délivrés à une unité de calcul 26 retranchant de chacun d'eux une valeur Ym correspondant par exemple à la valeur de la mesure effectuée sur la génératrice médiane du champignon du rail de manière à obtenir des indications rapportées au plan de la voie.

Puis chacun des signaux est comparé individuellement dans un comparateur 27k...27n aux valeurs mémorisées dans une mémoire 28k...28n d'un profil de référence. Ces comparateurs délivrent des signaux $\Delta pk$...$\Delta pn$ représentant les écarts du profil réel aux points K...N par rapport aux valeurs correspondantes du profil de référence.

Comme ces mesures s'effectuent pendant l'avance du chariot de mesure on forme ensuite de façon connue, la moyenne de chaque signal $\Delta pk$...$\Delta pn$ sur un intervalle déterminé puis on procède à son traitement pour obtenir une représentation adéquate de l'écart du profil.

En effet, la mesure effectuée détermine, dans l'exemple décrit, et la forme du profil réel et sa position par rapport à l'autre file de rails suivant des axes orthogonaux dont l'un est confondu avec l'axe de symétrie de la coupe transversale du rail et l'autre est situé perpendiculairement à l'axe du rail. Or, si l'on représente graphiquement le profil réel en utilisant ces coordonnées les flancs du rail sont représentés de façon très imprécise et indéterminée ce qui ne permet pas une utilisation pratique du graphique obtenu.

On transforme alors les coordonnées cartésiennes des points K...N du rail en coordonnées soit polaire en prenant comme origine un pôle situé sur l'axe de symétrie du rail, soit en ordonnées normale au profil de référence et abcisses curvilignes s.

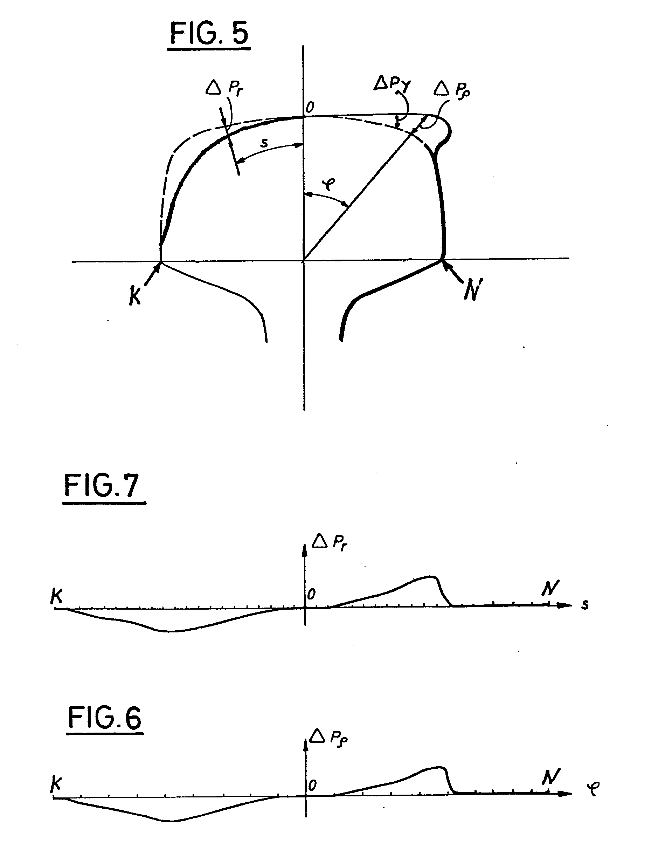

Dans le premier cas, on représente alors des écarts selon la figure 6, le profil de référence étant développé et étant représenté par la droite horizontale, les écarts $\Delta p\rho$ étant reportés en ordonnée en fonction de l'angle $\varphi$. On s'arrange pour que l'écart $\Delta p$ relatif à la génératrice médiane, située dans le plan de symétrie du rail, soit égal à zéro. De cette façon les $\Delta p$ positifs correspondent à un surplus de matière et les $\Delta p$ négatifs à un manque de matière du rail mesuré par rapport à son profil de référence.

Dans le second cas, on représente l'écart du profil selon la figure 7, le profil de référence étant à nouveau développé et représenté par la droite horizontale, les écarts $\Delta pr$ étant reportés en ordonnée en fonction de l'abcisse curviligne s du profil de référence. Ici également l'écart mesuré sur la génératrice médiane est pris comme origine des ordonnées.

Grâce à ces deux modes de représentation on obtient un diagramme facile à lire et précis pour toutes les parties du profil envisagé.

En parcourant ainsi la voie avec le chariot de mesure, on obtient une succession de représentations graphiques du profil transversal de chaque rail. Pour leur utilisation pratique on a intérêt à réduire le nombre de ces graphiques successifs et à n'effectuer une telle représentation que pour des intervalles préétablis, par exemple tous les mètres. Dans ce cas on peut enregistrer soit le profil instantané, soit le profil moyen sur la longueur de cet intervalle. On peut également réaliser une représentation, par exemple sur un oscillographe, en perspective d'un nombre donné de ces graphiques successifs.

Le mode de traitement électronique des signaux de mesure peut être modifié pour obtenir d'autres représentations, l'important étant que la mesure s'effectue toujours par rapport à une base de référence parallèle au plan de la voie et perpendiculaire à l'axe de celle-ci pour obtenir une indication non seulement de la forme du profil transversal du rail, mais également de son positionnement par rapport à l'autre file de rails.

Dans une variante, il est évident que l'on peut combiner la mesure du profil transversal du champignon du rail avec la mesure connue des déformations longitudinales de la surface de roulement du rail. Dans un tel cas, il est possible, par exemple, de remplacer l'un des trois capteurs décrits dans les brevets CH—A— 630016 ou A—630015 par l'un des capteurs décrits dans la présente demande. Dans ce cas le signal délivré par ce capteur sert simultanément à la détermination du profil transversal, ou d'une des caractéristiques du champignon du rail, et à la détermination des déformations longitudinales de la surface de roulement.

Grâce à l'utilisation d'une base de référence transversale, perpendiculaire à l'axe de la voie et parallèle à une tangente aux surfaces de roulement des deux files de rails, toute mesure faite sur l'une de ces files de rails ne dépend pas uniquement des caractéristiques propres de cette file de rails, mais également de son positionnement, notamment de son positionnement angulaire, par rapport à l'autre file de rails. Ceci constitue une des caractéristiques essentielles de l'invention.

**Revendications**

1. Procédé pour la détermination d'au moins une caractéristique géométrique du champignon d'au moins un rail d'une voie ferrée par mesure d'au moins deux points (A, C) de ce rail et calcul ultérieur, caractérisé par le fait qu'on détermine une base de référence perpendiculaire à l'axe de la voie et parallèle à une droite tangente à la surface de roulement des deux files de rails; qu'on détermine la position d'au moins deux points (A, C) de la surface du champignon d'un rail par rapport à cette base de référence; et qu'on calcule à partir de ces positions au moins une caractéristique du profil transversal du champignon du rail en fonction de sa position par rapport à l'autre file de rails.

2. Procédé selon la revendication 1, caractérisé par le fait qu'on détermine deux distances ($Y_a$, $Y_c$) séparant la base de référence de deux points (A, C) du rail situé sur des génératrices du champignon délimitant pratiquement la surface de roulement de celui-ci et qu'on calcule une valeur

$$\frac{Y_c - Y_a}{D},$$

D étant la distance séparant lesdites génératrices, représentative de l'inclinaison de cette surface de roulement par rapport au plan de la voie.

3. Procédé selon la revendication 1 ou la revendication 2, caractérisé par le fait qu'on détermine la distance $Y_b$ séparant la base de référence d'un point (B) du rail situé pratiquement sur la génératrice médiane du champignon et qu'on calcule une valeur

$$\frac{Y_a + Y_c - 2Y_b}{2}$$

représentative de la flèche de la surface de roulement sur la corde sous tendue.

4. Procédé selon la revendication 1, caractérisé par le fait qu'on mesure les distances séparant la base de référence d'une pluralité de points K...N de la surface du champignon du rail, situés sur différentes génératrices de celui-ci; qu'on compare ces mesures aux valeurs correspondantes d'un profil de référence; et qu'on représente graphiquement les écarts de profil Δp entre le profil mesuré et le profil de référence.

5. Procédé selon la revendication 4, caractérisé par le fait qu'on porte en ordonnées l'écart du profil Δp mesuré perpendiculairement au profil de référence et en abcisse l'arc s du profil de référence compté à partir du plan de symétrie longitudinal du rail.

6. Dispositif pour la détermination d'au moins une caractéristique du profil transversal du champignon d'au moins un rail d'une voie ferrée par mesure d'au moins deux points (A, C) de ce rail et calcul ultérieur, caractérisé par le fait qu'il comporte un chariot de mesure (1) en appui latéral et vertical sur les deux files de rails d'une voie ferrée définissant une base de référence perpendiculaire à l'axe de la voie et parallèle à une tangente aux plans de roulement des deux files de rails; au moins deux capteurs (13, 15) délivrant des signaux représentatifs de distances ($Y_a$, $Y_c$) séparant au moins deux génératrices du profil du champignon d'un rail de la base de référence; et un dispositif électronique comportant une unité de calcul déterminant à partir des signaux émis par les capteurs une caractéristique du profil transversal réel du rail en fonction de sa position par rapport à l'autre file de rails.

7. Dispositif selon la revendication 6, caractérisé par le fait que l'unité de calcul présente une fonction de transfert

$$\frac{Y_c - Y_a}{D},$$

D représentant la distance séparant les deux capteurs, unité de calcul délivrant un signal i représentatif de l'inclinaison de la surface de roulement du rail.

8. Dispositif selon la revendication 6 ou la revendication 7, caractérisé par le fait qu'il comporte trois capteurs et une seconde unité de calcul présentant une fonction de transfert

$$\frac{Y_a + Y_c - 2Y_b}{2}$$

délivrant un signal représentatif de la flèche de la surface de roulement du rail.

9. Dispositif selon la revendication 6, caractérisé par le fait qu'il comporte une pluralité de capteurs mesurant chacun la position d'un point du profil transversal du champignon et qu le dispositif électronique de traitement comporte des moyens comparant la position des points mesurés aux positions des points correspondants d'un profil de référence pour délivrer un signal Δp représentatif de l'écart par rapport à un profil de référence pour chaque point considéré.

10. Dispositif selon l'une des revendications 6 à 9 caractérisé par le fait qu'il comporte une mémoire stockant la valeur de référence de la caractéristique calculée et un comparateur délivrant un signal représentatif de l'écart entre la caractéristique calculée et la caractéristique correspondante du profil transversal de référence du rail correctement positionné.

11. Dispositif selon la revendication 9, caractérisé par le fait que le signal Δp est représentatif de l'écart entre le profil réel et le profil de référence mesuré suivant des directions passant par un pôle situé sur l'axe de symétrie du rail.

12. Dispositif selon la revendication 9, caractérisé par le fait que le signal Δp est représentatif de l'écart entre le profil réel et le profil de référence mesuré perpendiculairement à ce profil de référence.

13. Dispositif selon l'une des revendications 6 à 12, caractérisé par le fait qu'il comporte des capteurs pour chaque file de rails de la voie ainsi qu'un dispositif électronique associé à chaque file de rails.

14. Dispositif selon l'une des revendications 6 à 13, caractérisé par le fait qu'un des capteurs fait simultanément partie d'un dispositif de mesure des déformations longitudinales de la surface de roulement du rail.

**Patentansprüche**

1. Verfahren zum Messen wenigstens einer geometrischen Charakteristik des Kopfs wenigstens einer Schiene eines Schienenwegs durch Bestimmen der Lage wenigstens zweier Punkte (A, C) dieser Schiene und schließliche Berechnung, dadurch gekennzeichnet, daß man eine zur Achse des Schienenwegs senkrecht stehende und zu einer die Lauffläche zweier Schienenstränge berührenden Geraden parallele Bezugsbasis bestimmt, daß man die Lage wenigstens zweier Punkte (A, C) der Oberfläche des Kopfs einer Schiene gegenüber dieser Bezugsbasis bestimmt und daß man ausgehend von diesen Lagen wenigstens eine Charakteristik des Querprofils des Kopfs der Schiene in Abhängigkeit von seiner Stellung gegenüber dem anderen Schienenstrang berechnet.

2. Verfahren nach Anspruch 1, dadurch gekennzeichnet, daß man zwei Abstände ($Y_a$, $Y_c$) bestimmt, die die Bezugsbasis von zwei auf praktisch die Lauffläche der Schiene begrenzenden Erzeugenden des Schienenkopfes liegenden Punkten (A, C) des Kopfs trennen und daß man einen Wert

$$\frac{Y_c - Y_a}{D},$$

worin D der diese Erzeugenden trennende Abstand ist, berechnet, der die Neigung dieser Lauffläche gegenüber der Ebene des Schienenwegs darstellt.

3. Verfahren nach Anspruch 1 oder Anspruch 2, dadurch gekennzeichnet, daß man den die Bezugsbasis von einem praktisch auf der mittleren Erzeugenden des Kopfs liegenden Punkt (B) der Schiene trennenden Abstand $Y_b$ bestimmt und daß man einen die Pfeilhöhe der Lauffläche über der darunter gezogenen Sehne darstellenden Wert

$$\frac{Y_a - Y_c - 2Y_b}{2}$$

berechnet.

4. Verfahren nach Anspruch 1, dadurch gekennzeichnet, daß man die die Bezugsbasis von mehreren sich auf verschiedenen Erzeugenden des Kopfs befindenden Punkten (K...N) der Oberfläche des Kopfs der Schiene trennenden, Abstände bestimmt, daß man diese Meßwerte mit den entsprechenden Werten eines Bezugsprofils vergleicht und daß man Profilabweichungen $\Delta p$ zwischen dem gemessenen Profil und dem Bezugsprofil graphisch darstellt.

5. Verfahren nach Anspruch 4, dadurch gekennzeichnet, daß man die senkrecht zum Bezugsprofil gemessenen Profilabweichungen $\Delta p$ als Ordinate und die von der Längssymmetrieebene der Schiene aus gemessene Bogenlänge s des Bezugsprofils als Abszisse aufträgt.

6. Vorrichtung zur Messung wenigstens einer Charakteristik der Querprofils des Kopfs wenigstens einer Schiene eines Schienenwegs durch Messen der Lage von wenigstens zwei Punkten (A, C) dieser Schiene und schließliche Berechnung, dadurch gekennzeichnet, daß sie einen seitlich und senkrecht auf den beiden Schienensträngen eines Schienenwegs abgestützten Meßschlitten (1) aufweist, der eine zur Achse des Schienenwegs senkrechte und zu einer Tangente an die Laufflächen der beiden Schienenstränge parallele Bezugsbasis bildet, wenigstens zwei Geber (13, 15), aufweist, die Signale liefern, die die Abstände ($Y_a$, $Y_c$) darstellen, die wenigstens zwei Erzeugende des Profils des Kopfs einer Schiene von der Bezugsbasis trennen, und eine eine Recheneinheit aufweisende elektronische Vorrichtung aufweist, die ausgehend von den von den Gebern abgegebenen Signalen eine Charakteristik des tatsächlichen Querprofils der Schiene in Abhängigkeit von seiner Stellung gegenüber dem anderen Schienenstrang bestimmt.

7. Vorrichtung nach Anspruch 6, dadurch gekennzeichnet, daß die Recheneinheit eine Übertragungsfunktion

$$\frac{Y_c - Y_a}{D}$$

aufweist, wobei D den die beiden Geber trennenden Abstand darstellt und wobei die Recheneinheit ein Signal i liefert, das die Neigung der Lauffläche der Schiene darstellt.

8. Vorrichtung nach Anspruch 6 oder 7, dadurch gekennzeichnet, daß sie drei Geber und eine zweite Recheneinheit mit einer Übertragungsfunktion

$$\frac{Y_a + Y_c - 2Y_b}{2}$$

aufweist, die ein Signal liefert, das die Pfeilhöhe der Lauffläche der Schiene darstellt.

9. Vorrichtung nach Anspruch 6, dadurch gekennzeichnet, daß sie mehrere Geber aufweist, von denen jeder die Stellung eines Punkts des Querprofils des Kopfes mißt, und daß die elektronische Behandlungsvorrichtung eine Einrichtung aufweist, die die Stellung der gemessenen Punkte mit den Stellungen der entsprechenden Punkte eines Bezugsprofils zur Lieferung eines Signals $\Delta p$ vergleicht, das für jeden betrachteten Punkt die Abweichung gegenüber einem Bezugsprofil darstellt.

10. Vorrichtung nach einem der Ansprüche 6 bis 9, dadurch gekennzeichnet, daß sie einen den Bezugswert der berechneten Charakteristik speichernden Speicher und einen Komparator aufweist, der ein Signal liefert, das die Abweichung zwischen der berechneten Charakteristik und der entsprechenden Charakteristik des Querbezugsprofils der korrekt positionierten Schiene darstellt.

11. Vorrichtung nach Anspruch 9, dadurch gekennzeichnet, daß das Signal $\Delta p$ die Abweichung zwischen dem tatsächlichen Profil und dem Bezugsprofil darstellt, die in Richtungen gemessen wird, die durch einen auf der Symmetrieachse der Schiene gelegenen Pol verlaufen.

12. Vorrichtung nach Anspruch 9, dadurch gekennzeichnet, daß das Signal $\Delta p$ die senkrecht zum Bezugsprofil gemessene Abweichung zwischen dem tatsächlichen Profil und dem Bezugsprofil darstellt.

13. Vorrichtung nach einem der Ansprüche 6 bis 12, dadurch gekennzeichnet, daß sie Geber für jeden Schienenstrang des Schienenwegs und eine jedem Schienenstrang zugeordnete elektronische Vorrichtung aufweist.

14. Vorrichtung nach einem der Ansprüche 6 bis 13, dadurch gekennzeichnet, daß einer der Geber gleichzeitig einen Teil einer Vorrichtung zum Messen der Längsverformungen der Lauffläche der Schiene bildet.

**Claims**

1. Method for the determination of at least one geometrical characteristic of the head of at least one rail of a railway track, through measurement of at least two points (A, C) of said rail and subsequent calculation, characterized by the fact that one determines a reference base perpendicular to the axis of the track and parallel to a tangent line to the rolling surface of the two lines of rails; that one determines the position of at least two points of the surface of the head of the rail with respect to said reference base; and that one calculates from these positions at least one characteristic of the transversal profile of the head in function of its position with respect to the other line of rails.

2. Method according to claim 1, characterized by the fact that one determines two distances $(Y_a, Y_c)$ separating the reference base from two points $(A, C)$ of the rail located on longitudinal side lines of the head of the rail delimiting its rolling surface, and calculates a value

$$\frac{Y_c - Y_a}{D},$$

D being the distance separating the said side lines, which represents the inclination of that rolling surface with respect to the plane of the track.

3. Method according to claim 1 or claim 2, characterised by the fact that one determines the distance $Y_b$ separating the reference base from a point (B) of the rail located substantially on the median longitudinal side line of the head of the rail, and that one calculates a value

$$\frac{Y_a + Y_c - 2Y_b}{2}$$

which represents the deflection of the rolling surface of the subtended chord.

4. Method according to claim 1, characterized by the fact that one measures the distances separating the reference base from a plurality of points K...N on the surface of the head of the rail, located on different side lines of the rail head; that one compares these measurements to the corresponding values of a reference profile; and that one represents graphically the profile deviation $\Delta p$ between the measured profile and the reference profile.

5. Method according to claim 4, characterized by the fact that one plots in ordinates the deviation of the profile $\Delta p$ measured perpendicularly to the reference profile and in abscissa the arch s of the reference profile counted as from the longitudinal symmetry plan of the rail.

6. Device for the determination of at least one characteristic of the transversal profile of the head of at least one rail of a railway track, by measurement of at least two points (A, C) of said rail and subsequent calculation, characterized by the fact that it comprises a measuring carriage (1) resting laterally and vertically against the two lines of rails of a railway track defining a reference base perpendicular to the longitudinal axis of the track and parallel to a tangent line to the rolling plans of the two lines of rails; at least two detectors (13, 15) delivering signals representative of distances $(Y_a, Y_c)$ separating at least two longitudinal side lines of the tracing of the head of a rail from the reference base; and an electronic device comprising a calculating unit determining by the signals delivered by the detector a characteristic of the actual transversal profile of the rail in function of its position with respect to the other line of rails.

7. Device according to claim 6, characterised by the fact that the calculating unit has a transfer function

$$\frac{Y_c - Y_a}{D},$$

D representing the distance separating the two detectors, the calculating unit delivering a signal i which represents the inclination of the rolling surface of the rail.

8. Device according to claim 6 or claim 7, characterised by the fact that it comprises three detectors and a second calculating unit having a transfer function

$$\frac{Y_a + Y_c - 2Y_b}{2}$$

delivering a signal representing the deflection of the rolling surface of the rail.

9. Device according to claim 6, characterised by the fact that it comprises a plurality of detectors each measuring the position of one point of the transverse profile of the head of the rail, and that the electronic processing device comprises means comparing the position of the measured points to the position of corresponding points of a reference profile to deliver a signal $\Delta p$ representing the deviation for each considered point with respect to a reference profile.

10. Device according to one of claims 6 to 9, characterised by the fact that it comprises a memory memorizing the reference value of the calculated characteristic and a comparator delivering a signal representing the difference between the calculated characteristic and the corresponding characteristic of a reference profile of the rail when correctly positioned.

11. Device according to claim 9, characterised by the fact that the signal $\Delta p$ represents the deviation between the actual profile and the reference profile measured along directions passing through a center located on the symmetry axis of the rail.

12. Device according to claim 9, characterised by the fact that the signal $\Delta p$ represents the deviation between the actual profile and the reference profile measured perpendicularly to said reference profile.

13. Device according to one of claims 6 to 12, characterised by the fact that it comprises detectors for each line of rails as well as an electronic device associated to each line of rails.

14. Device according to one of claims 6 to 13, characterised by the fact that one of the detectors makes simultaneously part of a measuring device of the longitudinal deformations of the rolling surface of the rail.

## FIG.1

## FIG. 2

## FIG.3

FIG. 4

FIG. 8

FIG. 5

FIG.7

FIG.6